# EUROPEAN PATENT APPLICATION

(11) **EP 4 722 269 A1**
(43) Date of publication of application: **08.04.2026**
(21) Application number: 24815408.0
(22) Date of filing: 24.05.2024
(51) Int. Cl.: C08G 59/42, C08K 3/36, C08L 63/00

(54) **RESIN COMPOSITION**

(30) Priority: 30.05.2023 JP 2023089113
(71) Applicant: Daicel Corporation, Osaka-shi, Osaka 530-0011 (JP)
(72) Inventor: AMEMIYA, Yoshie, Tokyo 108-8230 (JP); NAKAMURA, Hiroko, Tokyo 108-8230 (JP)
(74) Representative: Grünecker Patent- und Rechtsanwälte PartG mbB
(86) International application number: PCT/JP2024/019227
(87) International publication number: WO 2024/247925

(57) **Abstract**

An object of the present disclosure is to provide a resin composition that can be used for potting encapsulation and can form a cured product having good adhesiveness and high reliability in a high-temperature environment. The resin composition of the present disclosure contains an epoxy compound (A), an acid anhydride (B), a silica filler (C), and a curing accelerator (D), wherein the resin composition has a glass transition temperature (Tg) of 175°C or higher and is liquid at room temperature. Preferably, when the resin composition is cured, it has an adhesive strength of 2.0 MPa or more to a copper substrate at 200°C.

## Description

### Technical Field

The present disclosure relates to a resin composition. The present application claims priority to JP 2023-089113 filed in Japan on May 30, 2023, the content of which is incorporated herein by reference.

### Background Art

A known method for encapsulating a semiconductor with a resin has been performed by transfer molding, in which a semiconductor mounted on a lead frame is set in a mold, a solid encapsulating resin is heated, melted, and poured into the mold, cured, and then removed from the mold; and potting encapsulation, in which a liquid encapsulating resin is added dropwise onto a semiconductor element installed in a package with a dispenser and then cured (for example, Patent Document 1).

### Citation List

### Patent Document

Patent Document 1: JP 2016-191031 A

### Summary of Invention

### Technical Problem

However, in the transfer molding as disclosed in Patent Document 1, the viscosity of the solid encapsulating resin remains very high even in the heated and molten state, and therefore potting encapsulation may be adopted as a method for producing a highly reliable semiconductor.

A silicone gel used for potting encapsulation exhibits high heat resistance but low adhesiveness, and under a use environment, peels off from the semiconductor element, thereby presenting the problem of reduced reliability.

Accordingly, it is an object of the present disclosure to provide a resin composition that can be used for potting encapsulation, the resin composition being capable of forming a cured product having good adhesiveness and high reliability even in a high-temperature environment.

### Solution to Problem

As a result of intensive efforts to solve the above-described problem, the present inventors have found that a resin composition containing an epoxy compound (A), an acid anhydride (B), a silica filler (C), and a curing accelerator (D), the resin composition having a glass transition temperature (Tg) of a certain level or higher and being liquid at room temperature, can be used for potting encapsulation and provides a cured product having good adhesiveness and high reliability in a high-temperature environment. The present disclosure relates to what has been completed based on these findings.

That is, the present disclosure provides a resin composition containing an epoxy compound (A), an acid anhydride (B), a silica filler (C), and a curing accelerator (D), wherein the resin composition has a glass transition temperature (Tg) of 175°C or higher and is liquid at room temperature.

The resin composition is liquid at room temperature before curing and thus can be used for potting encapsulation. Since the glass transition temperature (Tg) is 175°C or higher, the resin composition has heat resistance and achieves reliability even at high temperatures.

Preferably, when cured, the resin composition has an adhesive strength of 2.0 MPa or more to a copper substrate at 200°C. When the adhesive strength to the copper substrate at 200°C is 2.0 MPa or more, the adhesive strength at a high temperature can be made sufficient, and the reliability can be made excellent.

The resin composition preferably contains an alicyclic epoxy compound as the epoxy compound (A).

The resin composition preferably further contains, as the epoxy compound (A), an aromatic glycidyl ether type epoxy resin and/or an aromatic glycidylamine type epoxy resin.

The resin composition preferably contains a bisphenol A epoxy resin as the aromatic glycidyl ether type epoxy resin, and a compound having a diglycidylaniline skeleton as the aromatic glycidylamine type epoxy resin.

The resin composition preferably contains N,N-bis(2,3-epoxypropyl)-o-toluidine as the compound having a diglycidylaniline skeleton. When the resin composition has the above configuration, the resin composition can easily be reduced in viscosity while achieving reliability.

The resin composition preferably has a viscosity of 1000 Pa·s or less under a condition of a rotation speed of 0.01 rpm at room temperature. When the viscosity is 1000 Pa·s or less, handleability is excellent, and potting encapsulation is easily performed.

### Advantageous Effects of Invention

The resin composition of the present disclosure can be used for potting encapsulation, and can form a cured product having good adhesiveness and high reliability in a high-temperature environment.

### Description of Embodiments

### Resin Composition

The resin composition according to an embodiment of the present disclosure contains an epoxy compound (A), an acid anhydride (B), a silica filler (C), and a curing accelerator (D), and the resin composition has a glass transition temperature (Tg) of 175°C or higher and is liquid at room temperature.

In the present disclosure, liquid at normal temperature means exhibiting fluidity at 25°C, and solid at normal temperature means exhibiting no fluidity at 25°C.

In the present disclosure, epoxy compounds including also an epoxy resin may simply be referred to as "epoxy compounds". In addition, epoxy groups including also a glycidyl group may simply be referred to as "epoxy groups".

When the resin composition is cured, the adhesive strength to a copper substrate at 200°C is preferably 2.0 MPa or more, more preferably 2.3 MPa or more, and even more preferably 2.5 MPa or more. When the adhesive strength is 2.0 MPa or more, the resin composition has adhesiveness at high temperature and readily achieves reliability. In addition, the upper limit is not particularly limited, and is preferably 10 MPa or less.

When the resin composition is cured, the adhesive strength to a copper substrate at 25°C is preferably 3.0 MPa or more, more preferably 3.3 MPa or more, and even more preferably 3.5 MPa or more. When the adhesive strength is 3.0 MPa or more, the resin composition has adhesiveness at normal temperature during curing and readily achieves reliability. In addition, the upper limit is not particularly limited, and is preferably 10 MPa or less.

The ratio of the adhesive strength measured at 25°C to the adhesive strength measured at 200°C is preferably 5 or less, more preferably 3 or less, and even more preferably 2 or less. When the ratio of the adhesive strength is 5 or less, adhesiveness at a high temperature is easily exhibited.

The resin composition has a glass transition temperature (Tg) of 175°C or higher, preferably 180°C or higher, and more preferably 190°C or higher. When the Tg is 175°C or higher, the resin composition exhibits heat resistance and can achieve adhesiveness and reliability in a high-temperature environment. In addition, the upper limit is not particularly limited, and is preferably 300°C or lower.

When cured, the resin composition preferably has a linear expansion coefficient (α1) of 20 ppm/°C or less, more preferably 18 ppm/°C or less, and even more preferably 16 ppm/°C or less up to 60 to 80°C as measured under a temperature rise condition of 5°C/min. When the α1 is 20 ppm/°C or less, the linear expansion coefficient is suppressed to be low, and thus the cured product can be prevented from being peeled off from an adherend. In addition, the lower limit is not particularly limited, and is preferably 1 ppm/°C or more.

When cured, the resin composition preferably has a linear expansion coefficient (α2) of 55 ppm/°C or less, more preferably 50 ppm/°C or less, and even more preferably 45 ppm/°C or less up to 240 to 260°C as measured under a temperature rise condition of 5°C/min. When the α2 is 55 ppm/°C or less, the linear expansion coefficient is suppressed to be low even under a high temperature condition, and thus the cured product can be prevented from being peeled off from an adherend. In addition, the lower limit is not particularly limited, and is preferably 10 ppm/°C or more.

The resin composition is liquid at room temperature, and preferably has a viscosity of 1000 Pa·s or less, more preferably 900 Pa·s or less, and even more preferably 800 Pa·s or less as measured under the condition of a rotation speed of 0.01 rpm at room temperature. When the resin composition is liquid, it can be used for potting encapsulation. When the viscosity is 1000 Pa·s or less, handleability is excellent, and potting encapsulation is easily performed. In addition, the lower limit is not particularly limited, and is preferably 1 Pa·s or more.

The resin composition preferably has a viscosity of 1000 Pa·s or less, more preferably 900 Pa·s or less, and even more preferably 800 Pa·s or less as measured under the condition of a rotation speed of 0.01 to 100 rpm at room temperature. When the viscosity measured under the above conditions is 1000 Pa·s or less, handleability is excellent, and potting encapsulation is easily performed. In addition, the lower limit is not particularly limited, and is preferably 1 Pa·s or more.

### Epoxy Compound (A)

The resin composition contains an epoxy compound (A). The epoxy compound (A) is a compound having one or more epoxy groups in the molecule, and can be arbitrarily selected from publicly known or common epoxy compounds. In the present disclosure, one type of the aforementioned epoxy compound (A) may be used alone, or two or more types thereof may be used in combination.

Examples of the epoxy compound (A) include an aromatic epoxy compound, an aliphatic epoxy compound, an alicyclic epoxy compound, a heterocyclic epoxy compound, and a siloxane derivative having one or more epoxy groups in the molecule.

Examples of the aromatic epoxy compound include an aromatic glycidyl ether-based epoxy resin, aromatic glycidylamine type epoxy resin, and an aromatic glycidyl ester-based epoxy resin. Examples of the aromatic glycidyl ether-based epoxy resin include a bisphenol A epoxy resin, a bisphenol F epoxy resin, a novolac type epoxy resin such as a phenol novolac type epoxy resin, a cresol novolac type epoxy resin, or a bisphenol A cresol novolac type epoxy resin, a naphthalene type epoxy resin, and an epoxy resin formed from trisphenolmethane. Examples of the aromatic glycidylamine type epoxy resin include tetraglycidyl diaminodiphenylmethane, triglycidyl-p-aminophenol, triglycidyl aminocresol, diglycidylaniline, N,N-diglycidyl-4-glycidyloxyaniline, and a compound having the skeleton of each component described above. Examples of the aromatic glycidyl ester-based epoxy resin include diglycidyl esters of dicarboxylic acids such as aromatic dicarboxylic acids such as terephthalic acid, isophthalic acid, phthalic acid, tetrahydrophthalic acid, and hexahydrophthalic acid or hydrogenated products thereof; alkene oxides such as vinylcyclohexene dioxide; and triglycidyl isocyanurate.

The bisphenol A epoxy resin is a compound having one or more bisphenol A skeletons and one or more epoxy groups in the molecule.

The epoxy equivalent of the bisphenol A epoxy resin is not particularly limited, but is preferably 2000 (g/eq) or less, and more preferably 1000 or less. When the epoxy equivalent of the bisphenol A epoxy resin is 2000 or less, the viscosity of the resin composition is prevented from becoming too high, and the handleability tends to be improved. The lower limit of the epoxy equivalent is not particularly limited, but is, for example, 30 or more, and preferably 50 or more.

The weight average molecular weight (Mw) of the bisphenol A epoxy resin in terms of standard polystyrene is not particularly limited, but is preferably 10000 or less, and more preferably 8000 or less. When the weight average molecular weight of the bisphenol A epoxy resin is 10000 or less, the viscosity of the resin composition is prevented from becoming too high, and the handleability tends to be improved. The lower limit of the weight average molecular weight is not particularly limited, but is, for example, 60 or more, and preferably 100 or more. Note that the weight average molecular weight can be measured by gel permeation chromatography (GPC).

As the bisphenol A epoxy resin, for example, a commercially available product such as trade name "YD-128" (available from NIPPON STEEL Chemical & Material Co., Ltd.) can also be used.

The aromatic glycidylamine type epoxy resin is preferably a compound having a diglycidylaniline skeleton, and specifically, examples thereof include N,N-bis(2,3-epoxypropyl)-o-toluidine, N,N-bis(2,3-epoxypropyl)-m-toluidine, N,N-bis(2,3-epoxypropyl)-p-toluidine, diglycidyl-xylidine, diglycidyl-mesidine, diglycidyl-anisidine, diglycidyl-phenoxyaniline, and diglycidyl-naphthylamine. Among these, N,N-bis(2,3-epoxypropyl)-o-toluidine is particularly preferably contained as the compound having a diglycidylaniline skeleton to achieve low viscosity while maintaining the glass transition temperature (Tg) of the resin composition.

The alicyclic epoxy compound is a compound having one or more alicyclic rings (aliphatic hydrocarbon rings) and one or more epoxy groups in the molecule (where the above-described siloxane derivative having one or more epoxy groups in the molecule is excluded). Examples of the alicyclic epoxy compound include (i) a compound having at least one alicyclic epoxy group (an epoxy group composed of two adjacent carbon atoms constituting an alicyclic ring and an oxygen atom), preferably two or more alicyclic epoxy groups in the molecule, (ii) a compound having epoxy group directly bonded to an alicyclic ring through a single bond, (iii) a compound having an alicyclic ring and a glycidyl group.

The alicyclic epoxy group contained in the compound (i) having at least one alicyclic epoxy group in the molecule is not particularly limited, but among them, a cyclohexene oxide group (an epoxy group composed of two adjacent carbon atoms constituting a cyclohexane ring and an oxygen atom) is preferable from the viewpoint of curability. In particular, the compound (i) having at least one alicyclic epoxy group in the molecule is preferably a compound having two or more cyclohexene oxide groups in the molecule, and more preferably a compound represented by Formula (I) below from the viewpoint of the heat resistance of the cured product.

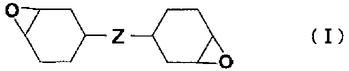

In Formula (I) above, Z represents a single bond or a linking group (a divalent group having one or more atoms). Examples of the linking group include a divalent hydrocarbon group, an epoxidized alkenylene group in which some or all of carbon-carbon double bonds are epoxidized, a carbonyl group, an ether bond, an ester bond, a carbonate group, an amide group, and a linked group in which a plurality of the above groups are linked. Note that a substituent such as an alkyl group may be bonded to one or more carbon atoms constituting the cyclohexane ring in Formula (I).

Examples of the compound in which Z is a single bond in Formula (I) include 3,4,3',4'-diepoxybicyclohexane.

Examples of the divalent hydrocarbon group include linear or branched alkylene groups having from 1 to 18 carbons and divalent alicyclic hydrocarbon groups. Examples of the linear or branched alkylene group having from 1 to 18 carbons include a methylene group, a methyl methylene group, a dimethyl methylene group, an ethylene group, a propylene group, and a trimethylene group. Examples of the divalent alicyclic hydrocarbon group include a divalent cycloalkylene group, such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are epoxidized (which may be referred to as an "epoxidized alkenylene group") include linear or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an epoxidized alkenylene group in which all of the carbon-carbon double bonds are epoxidized, and more preferably an epoxidized alkenylene group having from 2 to 4 carbons in which all of the carbon-carbon double bonds are epoxidized.

The linking group Z is, in particular, preferably a linking group containing an oxygen atom, and specifically, examples thereof include -CO-, - O-CO-O-, -COO-, -O-, -CONH-, and an epoxidized alkenylene group; a group in which a plurality of these groups are linked; and a group in which one or two or more of these groups and one or two or more of the divalent hydrocarbon groups are linked. Examples of the divalent hydrocarbon group include those exemplified above.

Representative examples of the alicyclic epoxy compounds represented by Formula (I) above include compounds represented by Formulae (I-1) to (I-10) below, bis(3,4-epoxycyclohexylmethyl) ether, 1,2-bis(3,4-epoxycyclohexan-1-yl)ethane, 1,2-epoxy-1,2-bis(3,4-epoxycyclohexan-1-yl)ethane, and 2,2-bis(3,4-epoxycyclohexan-1-yl)propane. In Formulae (I-5) and (I-7) below, l and m each represent an integer from 1 to 30. R in Formula (I-5) below is an alkylene group having from 1 to 8 carbons, and examples thereof include a linear or branched alkylene group, such as a methylene group, an ethylene group, a propylene group, an isopropylene group, a butylene group, an isobutylene group, an s-butylene group, a pentylene group, a hexylene group, a heptylene group, and an octylene group. Among these, a linear or branched alkylene group having from 1 to 3 carbons, such as a methylene group, an ethylene group, a propylene group, or an isopropylene group is preferred. In Formulae (I-9) and (I-10) below, n1 to n6 each represent an integer from 1 to 30.

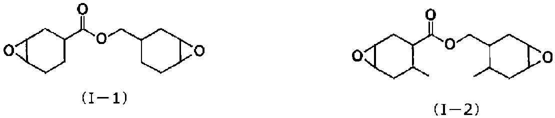

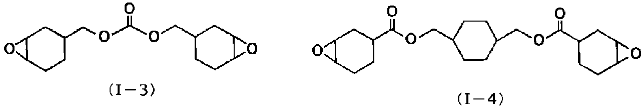

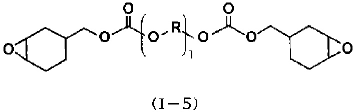

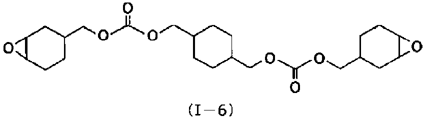

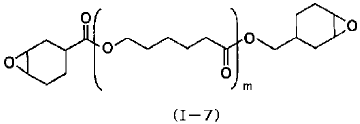

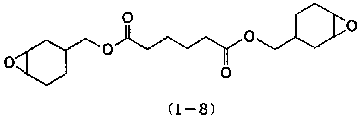

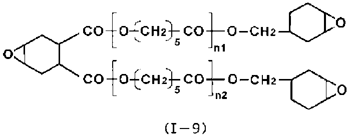

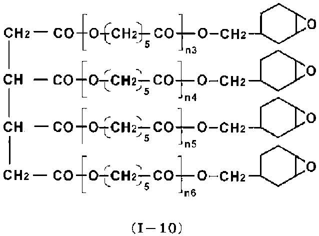

Examples of the compound (ii) having an epoxy group directly bonded to an alicycle through a single bond include compounds represented by Formula (II) below and the like.

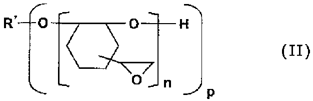

In Formula (II), R' is, in a structural formula, a group (p-valent organic group) resulting from elimination of a quantity of p hydroxy groups (-OH) from the structural formula of a p-hydric alcohol, where p and n each represent a natural number. Examples of the p-hydric alcohol [R'(OH)ₚ] include polyhydric alcohols (such as alcohols having from 1 to 15 carbons), such as 2,2-bis(hydroxymethyl)-1-butanol. Here, p is preferably from 1 to 6, and n is preferably from 1 to 30. When p is 2 or greater, n in each group within the brackets () (within the outer brackets) may be the same or different. Examples of the compound represented by Formula (II) above specifically include 1,2-epoxy-4-(2-oxiranyl)cyclohexane adduct of 2,2-bis(hydroxymethyl)-1-butanol (for example, trade name "EHPE3150", available from Daicel Corporation).

Examples of the compound having an alicyclic ring and a glycidyl group (iii) include a compound formed by hydrogenation of 2,2-bis[4-(2,3-epoxypropoxy)cyclohexyl]propane, 2,2-bis[3,5-dimethyl-4-(2,3-epoxypropoxy)cyclohexyl] propane, or a bisphenol A epoxy resin; a compound formed by hydrogenation of bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane, bis[3,5-dimethyl-4-(2,3-epoxypropoxy)cyclohexyl]methane, or a bisphenol F epoxy resin; hydrogenated bisphenol epoxy resin; hydrogenated novolac type epoxy resin such as hydrogenated phenol novolac type epoxy resin, hydrogenated cresol novolac type epoxy resin, and hydrogenated cresol novolac type epoxy resin of bisphenol A; hydrogenated naphthalene epoxy resin; and hydrogenated epoxy resin of an epoxy resin obtained from trisphenolmethane.

Examples of the additional alicyclic epoxy compound include 1,2,8,9-diepoxylimonene.

As the alicyclic epoxy compound, for example, commercially available products such as trade names "CELLOXIDE 2021P" and "CELLOXIDE 2081" (all of which are available from Daicel Corporation) can also be used. Among them, the compound represented by Formula (I-1) [3,4-epoxycyclohexylmethyl(3,4-epoxy)cyclohexane carboxylate, for example, trade name "CELLOXIDE 2021P", available from Daicel Corporation] is particularly preferable.

Examples of the heterocyclic epoxy compound include compounds having a heterocyclic ring other than an epoxy group and an epoxy group in the molecule, such as non-aromatic heterocyclic rings such as a tetrahydrofuran ring, a tetrahydropyran ring, a morpholine ring, a chroman ring, an isochroman ring, a tetrahydrothiophene ring, a tetrahydrothiopyran ring, an aziridine ring, a pyrrolidine ring, a piperidine ring, a piperazine ring, an indoline ring, a 2,6-dioxabicyclo[3.3.0]octane ring, a 1,3,5- triazacyclohexane ring, and a 1,3,5-triazacyclohexa-2,4,6-trione ring; and aromatic heterocyclic rings such as a thiophene ring, a pyrrole ring, a furan ring, and a pyridine ring.

The above-mentioned siloxane derivative having one or more epoxy groups in the molecule (sometimes referred to as "epoxy group-containing siloxane derivative") is a compound having a siloxane skeleton constituted by a siloxane bond (Si-O-Si) in the molecule and having one or more epoxy groups. Examples of the siloxane skeleton include a cyclic siloxane skeleton; and a polysiloxane skeleton such as linear or branched-chain silicone (linear or branched-chain polysiloxane), or cage or ladder polysilsesquioxane. The number of epoxy groups in the molecule of the epoxy group-containing siloxane derivative is not particularly limited, but is preferably from 2 to 4, and more preferably 3 or 4.

The epoxy compound (A) preferably contains an alicyclic epoxy compound, more preferably further contains an aromatic epoxy compound in addition to the alicyclic epoxy compound, preferably contains an aromatic glycidyl ether type epoxy resin and/or an aromatic glycidylamine type epoxy resin as the aromatic epoxy compound, even more preferably contains a bisphenol A epoxy resin as the aromatic glycidyl ether type epoxy resin and a compound having a diglycidylaniline skeleton as the aromatic glycidylamine type epoxy resin, and particularly preferably contains N,N-bis(2,3-epoxypropyl)-o-toluidine as the compound having a diglycidylaniline skeleton.

The epoxy compound (A) can be produced by a publicly known or common method, and a commercially available product can also be used.

The proportion of the epoxy compound (A) in the resin composition is preferably from 3 to 20 mass%, more preferably from 4 to 17 mass%, and even more preferably from 5 to 15 mass% per the total amount (100 mass%) of the resin composition. When the proportion of the epoxy compound (A) is 3 mass% or more, the curability of the resin composition tends to be improved, and the heat resistance of the cured product tends to be improved. On the other hand, when the proportion of the epoxy compound (A) is 20 mass% or less, the thermal shock resistance of the cured product is improved.

When the resin composition contains an alicyclic epoxy compound as the epoxy compound (A), the proportion of the alicyclic epoxy compound in the total amount (100 mass%) of the epoxy compound (A) is preferably 40 mass% or more, more preferably 50 mass% or more, and even more preferably 60 mass% or more. When the proportion of the epoxy compound (A) is 40 mass% or more, the heat resistance of the resin composition tends to be further improved, and the adhesiveness at high temperature tends to be further improved. On the other hand, the upper limit is not particularly limited and may be 100 mass%.

When the aromatic epoxy compound is contained as the epoxy compound (A) in addition to the alicyclic epoxy compound in the resin composition, the proportion of the aromatic epoxy compound to the alicyclic epoxy compound (100 parts by mass) is preferably from 40 to 100 parts by mass, more preferably from 50 to 100 parts by mass, and even more preferably from 60 to 90 parts by mass. When the proportion of the aromatic epoxy compound is within the above range, it becomes easy to reduce the viscosity while maintaining the heat resistance of the resin composition when cured.

The viscosity of the mixture of the epoxy compound (A) and the silica filler (C) measured at room temperature under the condition of a rotation speed of 0.01 to 100 rpm is preferably 300 Pa·s or less, more preferably 250 Pa·s or less, and even more preferably 200 Pa·s or less. When the viscosity is 300 Pa·s or less, the viscosity of the resin composition is easily reduced. In addition, the lower limit is not particularly limited, and is preferably 1 Pa·s or more.

The viscosity of the epoxy compound (A) alone measured at room temperature under the condition of a rotation speed of 0.01 to 100 rpm is preferably 10 Pa·s or less, more preferably 5 Pa·s or less, and even more preferably 1 Pa·s or less. When the viscosity is 10 Pa·s or less, the viscosity of the resin composition is easily reduced. In addition, the lower limit is not particularly limited, and is preferably 0.01 Pa·s or more.

### Acid Anhydride (B)

The resin composition contains an acid anhydride (B) as a curing agent. The acid anhydride (B) is a compound having a function of curing the resin composition by reacting with an epoxy compound. Furthermore, using the acid anhydride (B) as a curing agent prevents coloration, tending to provide a cured product excellent in hue. One type of the aforementioned acid anhydride (B) may be used alone, or two or more types thereof may be used in combination.

The acid anhydride (B) is not particularly limited, and a well-known acid anhydride can be used as a curing agent. Examples of the acid anhydride (B) include methyltetrahydrophthalic anhydride such as 4-methyltetrahydrophthalic anhydride and 3-methyltetrahydrophthalic anhydride, methylhexahydrophthalic anhydride such as 4-methylhexahydrophthalic anhydride and 3-methylhexahydrophthalic anhydride, dodecenyl succinic anhydride, methylendomethylenetetrahydrophthalic anhydride, phthalic anhydride, maleic anhydride, tetrahydrophthalic anhydride, hexahydrophthalic anhydride, methylcyclohexenedicarboxylic anhydride, pyromellitic anhydride, trimellitic anhydride, benzophenone tetracarboxylic anhydride, methylnadic anhydride such as nadic anhydride, 1-methylnadic anhydride, and 5-methylnadic anhydride, hydrogenated methylnadic anhydride, and, 4-(4-methyl-3 pentenyl)tetrahydrophthalic anhydride, succinic anhydride, adipic anhydride, sebacic anhydride, dodecanedioic anhydride, methylcyclohexene tetracarboxylic anhydride, vinyl ether-maleic anhydride copolymer, 1-methylnorbornane-2,3-dicarboxylic anhydride, methylnorbornane-2,3-dicarboxylic anhydride such as 5-methyl norbornane-2,3-dicarboxylic anhydride, norbornane-2,3-dicarboxylic anhydride and the like. Among them, from the viewpoint of handleability, methyltetrahydrophthalic anhydride, methylhexahydrophthalic anhydride, methylnadic anhydride, hydrogenated methylnadic anhydride, dodecenyl succinic anhydride, methylendomethylenetetrahydrophthalic anhydride and the like are preferable, and methylnadic anhydride is particularly preferable to improve the glass transition temperature (Tg) of the resin composition. Meanwhile, an acid anhydride that is solid at room temperature tends to improve in handleability as the acid anhydride (B) in the resin composition of the present disclosure when, for example, dissolved in an acid anhydride that is liquid at room temperature to form a liquid mixture.

As the acid anhydride (B), a commercially available product can be used, and examples thereof include trade name "RIKACID MH-700", "RIKACID MH-700 F", and "HNA100" (all of which are available from New Japan Chemical Co., Ltd.); trade name "HN -5500" (available from Resonac); and trade name "NMA" (available from Polynt).

The content of the acid anhydride (B) in the resin composition is preferably from 50 to 200 parts by mass and more preferably from 80 to 150 parts by mass, per 100 parts by mass of the epoxy compound (A) contained in the resin composition. The acid anhydride (B) contained in an amount of 50 parts by mass or more enables the curing reaction to proceed sufficiently and tends to improve toughness of the cured product. On the other hand, the acid anhydride (B) contained in an amount of 200 parts by mass or less prevents coloration and tends to provide a cured product excellent in hue.

In the resin composition, the equivalent ratio between the epoxy equivalent of the epoxy compound (A) and the acid anhydride equivalent of the acid anhydride (B) is preferably from 0.5 to 2.0, more preferably from 0.7 to 1.5. When the equivalent ratio of the epoxy compound (A) and the acid anhydride (B) is within the above range, curing can sufficiently proceed.

The viscosity of the mixture of the acid anhydride (B) and the silica filler (C) measured at room temperature under the condition of a rotation speed of 0.01 to 100 rpm is preferably 100 Pa·s or less, more preferably 70 Pa·s or less, and even more preferably 40 Pa·s or less. When the viscosity is 100 Pa·s or less, the viscosity of the resin composition is easily reduced. In addition, the lower limit is not particularly limited, and is preferably 1 Pa·s or more.

The viscosity of the acid anhydride (B) alone measured at room temperature under the condition of a rotation speed of 0.01 to 100 rpm is preferably 5 Pa·s or less, more preferably 1 Pa·s or less, and even more preferably 0.5 Pa·s or less. When the viscosity is 5 Pa·s or less, the viscosity of the resin composition is easily reduced. In addition, the lower limit is not particularly limited, and is preferably 0.001 Pa·s or more.

### Silica Filler (C)

The resin composition contains a silica filler (C). When the resin composition contains the silica filler (C), the linear expansion coefficient at the time of heating in the cured product of the resin composition can be reduced to improve adhesiveness to an adherend. One type of the aforementioned silica filler (C) may be used alone, or two or more types thereof may be used in combination.

As the silica constituting the silica filler (C), silica produced by a publicly known or common method such as a wet method such as a sedimentation method or a gel method, or a dry method such as a combustion method or an arc method can be used, and examples thereof include fumed silica, fused silica, crystalline silica, crushed silica, fine silica, high purity synthetic silica, colloidal silica, and precipitated silica.

The silica filler (C) may be a silica filler surface-treated with a surface treatment agent or a silica filler not surface-treated. The surface-treated silica filler is preferably silica surface-treated with at least one surface treatment agent selected from the group consisting of an organosilicon compound having an alkylsilyl group having 2 or more carbons, an organosilicon compound having a trimethylsilyl group, and an organosilicon compound having a linear or branched dimethylpolysiloxane group. That is, the silica filler (C) preferably has, on the surface thereof, at least one constituent unit selected from the group consisting of a constituent unit derived from an organosilicon compound having an alkylsilyl group with 2 or more carbons, a constituent unit derived from an organosilicon compound having a trimethylsilyl group, and a constituent unit derived from an organosilicon compound having a linear or branched dimethylpolysiloxane group.

Examples of the organosilicon compound having an alkylsilyl group having 2 or more carbons as the surface treatment agent in the silica filler (C) include alkylsilanes having a linear or branched alkyl group having 2 to 20 or preferably 3 to 20 carbons, such as ethyltrimethoxysilane, ethyltriethoxysilane, n-propyltrimethoxysilane, n-propyltriethoxysilane, i-propyltrimethoxysilane, **i-**propyltriethoxysilane, butyltrimethoxysilane, butyltriethoxysilane, hexyltrimethoxysilane, heptyltrimethoxysilane, octyltrimethoxysilane, octyltriethoxysilane, octyltrichlorosilane, octylsilane, octadecyltrichlorosilane, and hexadecylsilane. Examples of the organosilicon compound having a trimethylsilyl group include trimethylsilylating agents such as hexamethyldisilazane, trimethylsilyl chloride, trimethylmethoxysilane, and trimethylethoxysilane. Furthermore, examples of the organosilicon compound having a linear or branched dimethylpolysiloxane group include silicone oil having a linear or branched dimethylpolysiloxane group.

Note that one type of the aforementioned surface treatment agent can be used alone, or two or more types thereof can be used in combination. As the surface treatment agent for producing the silica filler (C), a surface treatment agent other than the above-described surface treatment agent can be used in combination.

The surface treatment of the raw material silica may be carried out by a publicly known or common method. As a surface treatment method, specifically, a dry method in which raw material silica is placed in a mixer such as a Henschel mixer or a V-type mixer, and the above-described surface treatment agent is added while stirring; a slurry method of adding the above-mentioned surface treatment agent into a slurry of raw material silica; and a spraying method in which the above-mentioned surface treatment agent is applied by spraying after drying the raw material silica. In the surface treatment, the above-described surface treatment agent can be used as it is, or can be used in the form of a solution or a dispersion.

Examples of the shape of the silica filler (C) include a round shape, a crushed shape, a fibrous shape, a needle shape, a scaly shape, and a whisker shape. Among them, a spherical shape is preferable from the viewpoint of dispersibility. The silica filler (C) may be in the form of hollow particles, solid particles, porous particles, or the like.

The average primary particle size of the silica filler (C) is preferably from 0.01 µm to 300 µm, more preferably from 0.5 µm to 250 µm, and even more preferably 0.5 µm to 150 µm. When the average primary particle size of the silica filler (C) is 0.01 µm or more, handling becomes easy from the viewpoint of workability and safety. On the other hand, when the average primary particle size of the silica filler (C) is 300 µm or less, a cured product obtained by curing the resin composition tends to exhibit sufficient transparency. The average primary particle size of the silica filler (C) can be measured, for example, by calculating the arithmetic average of the primary particle sizes of 100 silica fillers (C) using an electron microscope such as a scanning electron microscope (SEM) or a transmission electron microscope (TEM).

The content (blending amount) of the silica filler (C) in the resin composition is preferably from 60 to 95 mass%, more preferably from 65 to 90 mass%, and even more preferably from 70 to 85 mass% per 100 mass% of the total amount of the resin composition. When the content of the silica filler (C) is 60 mass% or more, the linear expansion coefficient during heating can be reduced, and adhesiveness at high temperature can be improved. On the other hand, when the content of the silica filler (C) is 95 mass% or less, the viscosity of the resin composition at room temperature is easily reduced.

### Curing Accelerator (D)

The resin composition contains a curing accelerator (D). The curing accelerator (D) is a compound that has a function of accelerating the reaction rate when the epoxy compound (A) is cured by the acid anhydride (B). One type of the aforementioned curing accelerator (D) may be used alone, or two or more types thereof may be used in combination.

As the curing accelerator (D), a publicly known or common curing accelerator can be used, and examples thereof include 1,8-diazabicyclo[5.4.0]undecene-7 (DBU), and salts thereof (for example, a phenol salt, an octylate salt, a p-toluene sulfonate salt, a formate salt, and a tetraphenylborate salt); 1,5-diazabicyclo[4.3.0]nonene-5 (DBN), and salts thereof (for example, a phenol salt, an octylate salt, a p-toluene sulfonate salt, a formate salt, and a tetraphenylborate salt); tertiary amines such as benzyl dimethylamine, 2,4,6-tris(dimethylaminomethyl) phenol, and N,N-dimethylcyclohexylamine; imidazoles such as 1-benzyl-2-methylimidazole, 2-ethyl-4-methyl imidazole and 1-cyanoethyl-2-ethyl-4-methyl imidazole; phosphines such as phosphates and triphenylphosphine; phosphonium compounds such as tetraphenylphosphonium tetra(p-tolyl)borate; organometallic salts such as tin octoate and zinc octoate; and metal chelates.

The content of the curing accelerator (D) is not particularly limited, but is preferably from 0.05 to 5 parts by mass, more preferably from 0.1 to 3 parts by mass, and even more preferably from 0.2 to 3 parts by mass, per the total amount (100 parts by mass) of the epoxy compound (A) contained in the resin composition. When the content of the curing accelerator (D) is 0.05 parts by mass or more, the curing acceleration effect can be sufficiently exhibited. On the other hand, when the content of the curing accelerator (D) is 5 parts by mass or less, it is possible to suppress deterioration in hue due to coloring of the cured product.

### Additional Component

The resin composition may contain an additional component besides the components described above. Examples of the additional component include well-known and common components such as curable components other than those described above, stabilizers such as thermoplastic resins, curing catalysts, antioxidants, ultraviolet absorbers, light stabilizers, and heat stabilizers, flame retardants such as phosphorus-based flame retardants, halogen-based flame retardants, and inorganic flame retardants, flame retardant auxiliaries, reinforcing materials, nucleating agents, lubricants, waxes, plasticizers, release agents, impact resistance improvers, hue improvers, flowability improvers, colorants such as dyes and pigments, surface modifiers such as various polyether-modified silicones, polyester-modified silicones, phenyl-modified silicones, and alkyl-modified silicones, dispersants, antifoaming agents, antibacterial agents, antiseptics, viscosity modifiers, thickeners, and other functional additives (for example, a zinc compound such as a zinc salt of a carboxylic acid). One type of the additional component can be used alone, or two or more types thereof can be used in combination. The content (blending amount) of the additional component is not particularly limited, and is preferably 10 mass% or less, more preferably 5 mass% or less, and may be 0 mass% in the total amount of the resin composition.

The resin composition is not particularly limited, but can be prepared by stirring and mixing the respective components in a heated state as necessary. Note that the resin composition can be used as a one-part composition that contains components mixed in advance and is used as is, or alternatively, the resin composition can be used as a multi-part (for example, two-part) composition, two or more components of which are separately stored and then mixed at predetermined proportions before use. The stirring and mixing method is not particularly limited, and a well-known or commonly used stirring and mixing unit can be used, for example, including a mixer of various types, such as a dissolver and a homogenizer; a kneader; a roll mill; a bead mill; and a rotation/revolution stirring apparatus. In addition, after the stirring and mixing, the mixture may be defoamed under vacuum.

### Cured Product

An embodiment of the present disclosure may be a cured product obtained by curing the resin composition. The cured product is excellent in adhesiveness even in a high-temperature environment, and a highly reliable cured product can be obtained. The heating temperature (curing temperature) during curing is not particularly limited, but is preferably from 50 to 200°C, and more preferably from 80 to 300°C. The heating time (curing time) during curing is not particularly limited, but is preferably from 30 minutes to 10 hours, and more preferably from 1 hour to 6 hours. When the curing temperature and the curing time are lower than the lower limit of the above range, curing becomes insufficient, and conversely, when the curing temperature and the curing time are higher than the upper limit of the above range, yellowing due to thermal decomposition occurs, which is not preferable. Although the curing conditions depend on various conditions, the curing conditions can be appropriately adjusted, for example, by shortening the curing time when the curing temperature is increased, or increasing the curing time when the curing temperature is reduced. In addition, the curing treatment may be performed in one stage or may be performed, for example, by further heating in an oven or the like as multiple stages (secondary curing). When curing is performed in multiple stages, the heating temperature at this time is preferably from 100 to 250°C, more preferably from 130 to 220°C, and even more preferably a temperature about the same as the curing temperature.

### Semiconductor Encapsulating Resin Composition

An embodiment of the present disclosure includes an aspect in which the resin composition is used as a semiconductor encapsulating resin composition. Using the resin composition as the semiconductor encapsulating resin composition, the resin composition has low viscosity and therefore exhibits excellent handleability, can be used for potting encapsulation, and after curing, provides a cured product (encapsulant) having excellent adhesiveness at a high temperature and high reliability, enabling a semiconductor element to be encapsulated. Since the cured product of the semiconductor encapsulating resin composition has excellent adhesiveness and reliability in a high-temperature environment, it can be suitably used even when the semiconductor device includes a high-output semiconductor element.

### Semiconductor Device

An embodiment of the present disclosure includes a semiconductor device in which a semiconductor element is encapsulated with a cured product of the resin composition (semiconductor encapsulating resin composition). The semiconductor element can be encapsulated by injecting the resin composition prepared by the above-described method through potting encapsulation and heating and curing the resin composition under predetermined conditions. As a result, the semiconductor element is encapsulated with the cured product of the resin composition, and a semiconductor device having reliability even in a high-temperature environment is obtained. The curing temperature and the curing time can be set to similar ranges as those during preparation of the cured product.

Each aspect disclosed in the present specification can be combined with another feature disclosed in the present specification. Moreover, each of the configurations, combinations thereof, and the like in each of the embodiments are merely examples, and various additions, omissions, and other changes of the configurations may be made, as appropriate, without departing from the spirit of the present disclosure. The present disclosure is not limited by the embodiments and is limited only by the claims.

### Examples

An embodiment of the present disclosure will be described in more detail below based on Examples.

### Examples 1 to 6 and Comparative Examples 1 and 2

### Preparation of Resin Composition

The agents A to D listed in Table 1 were mixed in a cup container in the mass ratios shown in Table 1, and the mixture was mixed and defoamed using a vacuum defoaming stirrer (trade name "Planetary centrifugal mixer Awatori Rentaro vacuum type ARV-310", available from Thinky Corporation) to prepare liquid resin compositions of Examples and Comparative Examples.

Components listed in Table 1 are described in detail below. In Table 1, the items of agents A to D describe the blending amount (parts by mass) of each agent.

### (Agent A)

A-1: 3,4-epoxycyclohexylmethyl(3,4-epoxy)cyclohexane carboxylate, trade name "CELLOXIDE 2021P", available from Daicel Corporation; epoxy equivalent: 130 g/eq
A-2: N,N-bis(2,3-epoxypropyl)-o-toluidine, available from Nippon Kayaku Co.,Ltd.; epoxy equivalent: 131 g/eq
A-3: poly[2-(chloromethyl)oxirane-alt-4,4'-(propane-2,2-diyl)diphenol] (bisphenol A epoxy resin), trade name "YD-128", available from NIPPON STEEL Chemical & Material Co., Ltd.; epoxy equivalent: 189 g/eq
A-4: polycondensate of 4,4'-isopropylidenebis(2,6-dibromophenol) and 1-chloro-2,3-epoxypropane, trade name "NPEB-400" available from Nan Ya Plastics Corporation; epoxy equivalent: 385 g/eq

### (Agent B)

B-1: liquid alicyclic acid anhydride, trade name "RIKACID MF-700F", available from New Japan Chemical Co., Ltd.; acid anhydride equivalent: 163 g/eq
B-2: methylnadic anhydride, trade name "NMA", available from Polynt; acid anhydride equivalent: 176.2 g/eq
B-3: hydrogenated methylnadic anhydride, trade name "HNA100", available from New Japan Chemical Co., Ltd.; acid anhydride equivalent: 184g/eq

### (Agent C)

C-1: silica filler, average particle size: 30 µm, trade name "FB-950", available from Denka Company Limited

### (Agent D)

D-1: imidazole type catalyst, trade name "1B2MZ", available from Shikoku Chemicals Corporation

The resin composition was evaluated as follows, and the results are shown in Table 1.

### Evaluation

### (1) Viscosity

The viscosity of the resin composition obtained in each of Examples and Comparative Examples as the viscosity of the resin composition, the viscosity of the mixture of the agent A and the agent C used in each of Examples and Comparative Examples as the viscosity of the agent A, and the viscosity of the mixture of the agent B and the agent C used in each of Examples and Comparative Examples as the viscosity of the agent B were measured under the conditions of cone plate: D-PP25, gap: 0.5 mm, temperature: 25°C, and rotation speed: 0.01 to 100 rpm using a rheometer (trade name: MCR302, available from Anton Paar GmbH). In the case of Comparative Example 1 in which the agent C was not added, the viscosity of the agent A alone and the agent B alone was measured.

### (2) Glass Transition Temperature (Tg) and Linear Expansion Coefficients (α1 and α2)

The resin compositions obtained in Examples and Comparative Examples were heated cured at 100°C for 2 hours and subsequently at 200°C for 2 hours to obtain cured products. The glass transition temperature and the linear expansion coefficients (α1 and α2) of the cured product were determined under the following conditions.
Sample size: 20 mm in length x 10 mm in width x 10 mm in thickness
Measurement apparatus: thermomechanical measurement apparatus (TMA), trade name "TMA/SS6000", available from Seiko Instruments Inc.
Measurement mode: compression, constant load measurement
Measurement temperature: Heating from 25°C to 240°C. at 5°C/min, rapidly cooling from 240°C to 20°C at 10°C/min, and heating from 20°C to 260°C at 5°C/min
Linear expansion coefficient: α1 measured at 60 to 80°C, α2 measured at 240 to 260°C

### (3) Adhesive Strength

The resin compositions (φ5.5 mm, thickness 2 mm) obtained in Examples and Comparative Examples were heated and cured on a copper substrate at 100°C for 2 hours and subsequently at 200°C for 2 hours to obtain cured products. The obtained cured products were each evaluated as follows. The substrate was heated to 25°C and 200°C and evaluated as follows.

Evaluation: For each of the cured products described above, the adhesive strength to each of the substrates described above was measured under the condition of a measurement speed of 300 µm/s using a die shear tester (trade name: "DAGE 4000 PXY", available from Nordson Advanced Technology Inc.).

### [Table 1]

**Table 1**

| | | | Example 1 | Example 2 | Example 3 | Example 4 | Example 5 | Example 6 | Comparative Example 1 | Comparative Example 2 |
|---|---|---|---|---|---|---|---|---|---|---|
| Agent A | A-1 | | 100 | 100 | 60 | 100 | 60 | 60 | 100 | 0 |
| | A-2 | | 0 | 0 | 40 | 0 | 10 | 10 | 0 | 0 |
| | A-3 | | 0 | 0 | 0 | 0 | 30 | 0 | 0 | 100 |
| | A-4 | | 0 | 0 | 0 | 0 | 0 | 30 | 0 | 0 |
| Agent B | B-1 | | 0 | 128 | 110 | 0 | 0 | 0 | 116 | 0 |
| | B-2 | | 135 | 0 | 0 | 0 | 125 | 110 | 0 | 95 |
| | B-3 | | 0 | 0 | 0 | 145 | 0 | 0 | 0 | 0 |
| Agent C | C-1 | | 950 | 915 | 850 | 975 | 900 | 840 | 0 | 780 |
| Agent D | D-1 | | 2.1 | 2.1 | 2.1 | 2.1 | 2.1 | 2.1 | 2.1 | 2.1 |
| Viscosity of agent A | Rotation speed = 0.01 [rpm] | Pa·s | 52 | 52 | 29 | 52 | 36 | 176 | 0.25 | 1665000 |
| | Rotation speed = 1 [rpm] | Pa·s | 33 | 33 | 22 | 33 | 47 | 174 | 0.25 | 12190 |
| | Rotation speed = 10 [rpm] | Pa·s | 24 | 24 | 12 | 24 | 39 | 117 | 0.25 | 1058 |
| | Rotation speed = 100 [rpm] | Pa·s | 14 | 14 | 8 | 14 | 22 | 1 | 0.25 | 6 |
| Viscosity of agent B | Rotation speed = 0.01 [rpm] | Pa·s | 29 | 2 | 2 | 13 | 29 | 29 | 0.06 | 29 |
| | Rotation speed = 1 [rpm] | Pa·s | 37 | 10 | 10 | 43 | 37 | 37 | 0.06 | 37 |
| | Rotation speed = 10 [rpm] | Pa·s | 26 | 7 | 7 | 33 | 26 | 26 | 0.06 | 26 |
| | Rotation speed = 100 [rpm] | Pa·s | 15 | 5 | 5 | 18 | 15 | 15 | 0.06 | 15 |
| Viscosity of resin composition | Rotation speed = 0.01 [rpm] | Pa·s | 116 | - | - - | - | - - | 994 | - | 3865000 |
| | Rotation speed = 1 | Pa·s | 56 | - | - | - | - | 149 | - | 41880 |
| | [rpm] Rotation speed = 10 [rpm] | Pa·s | 35 | - | - | - | - | 77 | - | 2616 |
| | Rotation speed = 100 [rpm] | Pa·s | 17 | - | - | - | - | 1 | - | 18 |
| Glass transition temperature (Tg) | 1st | °C | 223 | 206 | 203 | 219 | 207 | 216 | 217 | 164 |
| | 2nd | °C | 222 | 216 | 213 | 216 | 208 | 218 | 218 | 163 |
| Linear expansion coefficient | α1 | ppm/°C | 16 | 13 | 15 | 15 | 15 | 14 | 80 | 13 |
| | α2 | ppm/°C | 35 | 37 | 30 | 35 | 38 | 52 | 124 | 57 |
| Adhesive strength | 25°C | MPa | 6.0 | 5.0 | 4.8 | 3.9 | 4.5 | 5.7 | - | 6.8 |
| | 200°C | MPa | 3.8 | 3.2 | 3.3 | 2.5 | 2.6 | 3.1 | - | 1.2 |

As shown in Table 1, it was confirmed that the resin compositions of Examples had a glass transition temperature (Tg) of 175°C or higher, had heat resistance, and exhibited good adhesiveness even at high temperature, and thus could achieve reliability. On the other hand, when the silica filler (C) was not contained, the glass transition temperature (Tg) was sufficient, but the linear expansion coefficient increased, resulting in poor reliability (Comparative Example 1). Furthermore, the resin composition of Comparative Example 2 had a low glass transition temperature Tg, and the adhesive strength at high temperatures was insufficient (Comparative Example 2).

Hereinafter, variations of the present disclosure will be described.

### Appendix 1

A resin composition containing an epoxy compound (A), an acid anhydride (B), a silica filler (C), and a curing accelerator (D), wherein the resin composition has a glass transition temperature (Tg) of 175°C or higher and is liquid at room temperature.

### Appendix 2

The resin composition according to Appendix 1, wherein when cured, the resin composition has an adhesive strength of 2.0 MPa or more to a copper substrate at 200°C.

### Appendix 3

The resin composition according to Appendix 1 or 2, containing an alicyclic epoxy compound as the epoxy compound (A).

### Appendix 4

The resin composition according to Appendix 3, further containing, as the epoxy compound (A), an aromatic glycidyl ether type epoxy resin and/or an aromatic glycidylamine type epoxy resin.

### Appendix 5

The resin composition according to Appendix 4, containing a bisphenol A epoxy resin as the aromatic glycidyl ether type epoxy resin, and a compound having a diglycidylaniline skeleton as the aromatic glycidylamine type epoxy resin.

### Appendix 6

The resin composition according to Appendix 5, containing N,N-bis(2,3-epoxypropyl)-o-toluidine as the compound having a diglycidylaniline skeleton.

### Appendix 7

The resin composition according to any one of Appendices 1 to 6, wherein the resin composition has a viscosity of 1000 Pa·s or less as measured under a condition of a rotation speed of 0.01 rpm at room temperature.

## Claims

1. A resin composition comprising an epoxy compound (A), an acid anhydride (B), a silica filler (C), and a curing accelerator (D), wherein the resin composition has a glass transition temperature (Tg) of 175°C or higher and is liquid at room temperature.

2. The resin composition according to claim 1, wherein when cured, the resin composition has an adhesive strength of 2.0 MPa or more to a copper substrate at 200°C.

3. The resin composition according to claim 1 or 2, comprising an alicyclic epoxy compound as the epoxy compound (A).

4. The resin composition according to claim 3, further comprising, as the epoxy compound (A), an aromatic glycidyl ether type epoxy resin and/or an aromatic glycidylamine type epoxy resin.

5. The resin composition according to claim 4, comprising a bisphenol A epoxy resin as the aromatic glycidyl ether type epoxy resin, and a compound having a diglycidylaniline skeleton as the aromatic glycidylamine type epoxy resin.

6. The resin composition according to claim 5, comprising N,N-bis(2,3-epoxypropyl)-o-toluidine as the compound having a diglycidylaniline skeleton.

7. The resin composition according to claim 1 or 2, wherein the resin composition has a viscosity of 1000 Pa·s or less as measured under a condition of a rotation speed of 0.01 rpm at room temperature.
